# EUROPEAN PATENT SPECIFICATION

(11) **EP 0 933 988 B1**
(45) Date of publication and mention of the grant of the patent: **04.12.2002**
(21) Application number: 97943416.4
(22) Date of filing: 18.09.1997
(51) Int. Cl.: A01M 1/20

(54) **BAIT STATION FOR CRAWLING INSECTS**
KÖDERSTATION FÜR KRIECHENDE INSEKTEN
POINT D'APPAT POUR INSECTES RAMPANTS

(30) Priority: 18.09.1996 US 715558; 22.01.1997 US 787558
(43) Date of publication of application: 11.08.1999
(73) Proprietor: S.C. JOHNSON & SON, INC., Racine, Wisconsin 53403 (US)
(72) Inventor: ANGELL, Charles, Austen, Madison, WI 53715 (US); DEMAREST, Scott, W., Caledonia, WI 53108 (US); FURNER, Paul, E., Racine, WI 53406 (US)
(74) Representative: Jones, Alan John
(86) International application number: US9716755
(87) International publication number: WO98011775

(56) References cited:
- US-A- 4 485 582
- US-A- 4 563 836
- US-A- 4 782 621
- US-A- 4 793 093
- US-A- 4 823 506
- US-A- 4 837 969
- US-A- 4 894 947
- US-A- 5 048 225
- US-A- 5 357 709

## Description

### Technical Field

The present invention relates generally to the field of insect bait stations. More particularly, the invention relates to insect bait stations adapted for use with crawling insects.

### Background Art

The art is generally aware of insect bait stations for crawling insects that have a base with various topographical features and with a cover that spans those features to create an enclosed bait station. Examples include Woodruff et al., U.S. Pat. No. 4,536,836; Brandli, U.S. Pat. No. 4,894,947; Brandli, U.S. Pat. No. 5,048,225; Morris, U.S. Pat. No. 4,485,582; Mares, U.S. Pat. No. Des. 306,895; Mares, U.S. Pat. No. Des. 326,890; Wissman, U.S. Pat. No. 4,782,612; Gentile, U.S. Pat. No. 4,793,093; Demarest et al., U.S. Pat. No. 4,823,506; Demarest, U.S. Pat. No. 4,837,969; and Lin, U.S. Pat. No. 5,357,709. This list is by no means intended to be comprehensive, this being a crowded art.

Commonly, though not universally, these bait stations employ features such as walls or passageways that are unitarily formed as parts of the base of the bait station. The cover associated with such a base typically spans these structures without significantly obstructing them.

Woodruff et al., U.S. Pat. No. 4,563,836, is an example of this sort of structure, the base portion of the Woodruff et al. insect feeding station including outer and inner walls with openings in them through which insects can pass. In Woodruff, all of these features are formed as a unitary piece of a flat, deformable sheet of plastic or other material. The Woodruff et al. cover spans all of these features. All portions of the cover remain elevated well above the floors of the openings that are formed in the walls, leaving these openings sufficiently unobstructed that an insect can pass through them. Except for its relatively shallow rim, the Woodruff et al. cover itself is a generally flat, featureless structure, an arrangement not uncommon among the bait stations noted above.

The bait station of Demarest, U.S. Pat. No. 4,837,969, utilizes a different approach. In Demarest, '969, the base includes a number of upwardly projecting features. The cover, however, instead of simply being flat, includes as parts of the cover the exterior side walls of the bait station. The cover of Demarest '969 thus constitutes a shell that fits down over and interacts with the underlying structures of the base. The doors by which insects can enter the Demarest '969 bait station are formed not as gaps in walls rising from the base but instead are holes in the shell portion of the cover.

The cover of a bait station such as that of Demarest '969 must be capable of bearing a certain amount of top loading without being crushed. Thin walls for the shell are desirable in order to reduce the amount of plastic used in manufacture, thus contributing to the economy of the bait station. But thinning the walls reduces their strength and crush resistance.

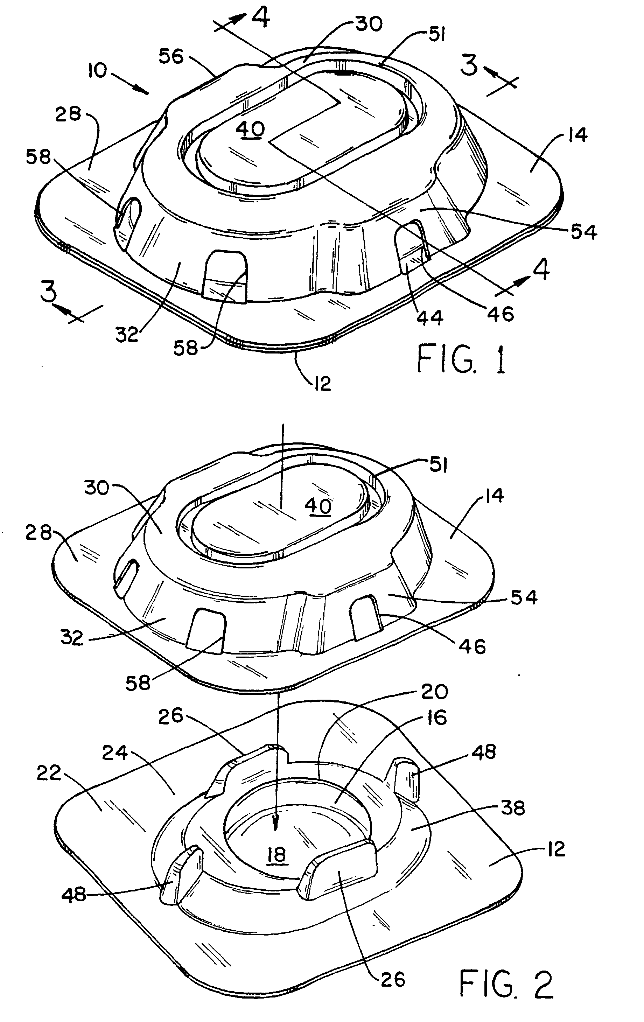

In Demarest '969, inner walls, shown at 14 in Fig. 2 of Demarest '969, are formed as a part of the base and provide support for the cover. The geometry of the Demarest '969 bait station is such that these walls may be longitudinally extended, projecting radially from a central well 18 (seen in Fig. 2 of Demarest '969) toward the outermost portions of the cover. This arrangement is accommodated by the "multi-lobed" design of the cover, as disclosed in Demarest '969. Thus the cover of Demarest '969 may be thin and relatively flexible in that it need span only the modest width of the bait well of the bait station. However, the arrangement does subdivide each lobe of the cover, thus blocking the movement of insects around the periphery of the interior of the bait station.

An ongoing need still exists in the art for a bait station for crawling insects that utilizes a cover that has a shell that may be made of thin materials but that is used in association with a base having structures that provide longitudinally extended support for the shell such that the shell can span relatively great distances with adequate crush resistance, such bait station still providing ready access to bait held within the bait station for insects entering doors formed in the shell.

### Summary of the Invention

The invention may be summarized in that a bait station for targeted crawling insects includes a base and a cover that is fastened to the base. The base includes a bait cup for containing a selected bait, the bait cup having a central floor surrounded by an insect-climbable bait cup wall extending upwardly from the central floor. The base further includes a peripheral flange including a peripheral floor distal and adjacent to the bait cup.

The cover has a cover flange attached to the peripheral flange of the base and also includes a shell that has a shell wall rising from the level of the peripheral floor of the base. The interior surfaces of the shell wall are spaced from the bait cup wall to define a walkway therebetween having a walkway floor of a width sufficient to allow targeted insects to walk thereon. The shell further includes a roof spanning the space encompassed by the shell wall at a distance above the bait cup wall sufficient that targeted insects may crawl over the bait cup wall to gain access to any bait contained therein.

One of the cover and the base includes at least one support substantially spanning the space between the cover and the base and extending longitudinally generally along the bait cup wall, the roof being supportable by the side support. A part of the shell generally co-extensive with and generally opposed to the side support constitutes an antechamber shell wall, the side support and the antechamber shell wall defining between them an antechamber. The antechamber is open to the walkway with an antechamber floor that is continuous with the walkway floor.

The antechamber has at least one antechamber door, opening through the shell wall, the antechamber door having a size sufficiently large to admit a targeted insect. The antechamber door is so located in relation to the side support that straight-line access through the antechamber door to the bait cup is blocked by the side support. The antechamber provides sufficient space between the side support and the shell wall that a targeted insect may enter the bait station through the antechamber door, avoid the side support by entering the walkway, and thus gain access to any bait in the bait cup.

The invention may alternatively be summarized in that a bait station for crawling insects for targeted insects includes a base and a cover that is fastened to the base, the base including a bait cup for containing a selected bait, the bait cup having a central floor surrounded by an insect-climbable bait cup wall extending upwardly from the central floor. The base further includes a peripheral flange that includes a peripheral floor distal and adjacent to the bait cup. At least one side support extends upwardly above the level of the bait cup wall and extends longitudinally generally along the bait cup wall.

The cover has a cover flange attached to the peripheral flange of the base and includes a shell that has a shell wall rising from the level of and enclosing the peripheral floor of the base. The shell wall is spaced from the bait cup wall to define a walkway therebetween having a walkway floor of a width sufficient to allow targeted insects to walk thereon. The shell also includes a roof that spans the space encompassed by the shell wall, the roof being supportable by the side support and being sufficiently spaced above the bait cup wall that targeted insects may crawl over the bait cup wall to reach any bait contained within the bait cup.

The bait station further includes an antechamber that is at least as long as the side support and is defined on one side by the side support and on another side by interior surfaces of the shell wall, the antechamber having a floor that is continuous with the walkway floor. At least one antechamber door is located in the shell wall, opening into the antechamber and having a size sufficiently large to admit a targeted insect, the antechamber door being so located in relation to the side support that straight-line access through the antechamber door to the bait cup is blocked by the side support. The antechamber provides sufficient space from the side support to the shell wall that a targeted insect may enter the bait station through the antechamber door, avoid the side support by entering the walkway, and thus gain access to any bait contained in the bait cup.

A part of the shell wall at the location of the side support constitutes an antechamber shell wall. A portion of the antechamber shell wall is displaced distally relative to the portions of the shell wall immediately on either side of the antechamber shell wall so that the antechamber shell wall defines a thrust-out wall section. The space between the antechamber shell wall and the portion of the bait cup wall opposed thereto defines an antechamber.

In a preferred embodiment, the base also includes a peripheral flange including a peripheral floor distal and adjacent to the bait cup and an end support extending upwardly from the peripheral floor, the end support having a roof detent. The cover has a cover flange attached to the peripheral flange of the base and further includes a shell. The shell includes a shell wall arising from the level of and enclosing the peripheral floor of the base, the shell wall preferably being spaced from the bait cup wall to define a walkway therebetween having a walkway floor of a width sufficient to allow targeted insects to walk thereon. A roof spans the space encompassed by the shell wall, the roof being supportable by the end support and being sufficiently spaced above the bait cup wall that targeted insects may crawl over the bait cup wall to reach any bait contained within the bait cup. The roof further includes a locator rib engaged in the roof detent of the end support to stabilize movement of the roof with respect to the end support.

The method of the invention may be summarized in that a method of presenting bait to targeted crawling insects includes a first step of providing a bait station in accordance with the bait stations summarized above, further including a selected bait placed within the bait cup. A second step of the method of the invention is to place the bait station on a surface upon which the targeted insects crawl.

### Brief Description of the Drawings

Fig. 1 is a front perspective view of the preferred embodiment of the insect bait station of the invention.
Fig. 2 is an exploded view of the insect bait station of Fig. 1, showing the base and the cover.
Fig. 3 is a cross-sectional view of the insect bait station of Fig. 1, taken along section lines 3--3 of Fig. 1.
Fig. 4 is a cross-sectional view of the insect bait station of Fig. 1, taken along staggered section lines 4--4 of Fig. 1.
Fig. 5 is a top plan view of the insect bait station of Fig. 1, with a portion of the cover removed to reveal the underlying base, the removed portion of the cover being shown in phantom.
Fig. 6 is a front perspective view of an alternative embodiment of the base, corresponding to the base shown as a part of Fig. 2.
Fig. 7 is a front perspective view, comparable to Fig. 6, of a second alternative embodiment of the base.
Fig. 8 is a cross-sectional view of a portion of an embodiment of the insect bait station of the invention utilizing the base of Fig. 6, the view otherwise corresponding to the right-hand portion of Fig. 3.

### Detailed Description of the Preferred Embodiment

Turning now to the drawings, wherein like parts are indicated by like reference numbers, a first embodiment of the insect bait station of the invention is shown generally in Fig. 1 at 10. The insect bait station 10 is intended for use with crawling insects such as, but not limited to, roaches and ants. When the size of parts described below is stated in terms of a targeted insect, it is presumed that the type and therefore the size of the targeted insect is known.

The bait station 10 has a base 12 and cover 14, the cover being fastened to the base. The base 12 and cover 14 each are unitarily formed, preferably from plastic by thermoforming, injection molding, or any other of the means familiar to those skilled in the art for making thin-walled plastic parts.

The base 12 includes a bait cup 16, most easily seen in Fig. 2. The bait cup 16 is provided as a container for a selected bait (not shown). A variety of baits suitable for use within the bait station 10 are well known to those skilled in the art and commonly include an insecticide or other material to which it is desired to expose a targeted insect.

The bait cup 16 has a central floor 18. The central floor 18 is surrounded by an insect-climbable bait cup wall 20. The bait cup wall 20 extends upwardly from the central floor 18 for a selected distance.

The base 12 further includes a peripheral flange 22. A portion of the peripheral flange 22 that is distal and adjacent to the bait cup 16 is designated as the peripheral floor 24. The width of the peripheral floor 24 outwardly from the bait cup 16 is defined below.

At least one side support 26 extends upwardly from the base to a point above the upwardmost extension of the bait cup wall 20. The side support 26 is longitudinally extended and extends longitudinally generally along the bait cup wall 20.

The bait cup wall 20 may define any convenient, closed geometric shape, including but not limited to a circle (as shown in the drawings), an oval, or other regular or irregular curved shapes; a square, rectangle, triangle, or other straight-sided shape; or a shape having a combination of straight and curved sides. A side support 26 shall be deemed to extend longitudinally "generally along" the bait cup wall 20 if the side support extends longitudinally in a direction that includes or varies between being equidistant from the bait cup wall, curving toward the bait cup wall, and being parallel to a tangent to the bait cup wall, such tangent being taken at a point within the length of and preferably at the middle of the side support.

The cover 14 has a cover flange 28. The cover flange 28 is fixedly attached to the peripheral flange 22 of the base 12. Such attachment may be by the use of a glue, thermoplastic welding, riveting, stapling, or other mechanical means, or any other convenient means of attachment selected from among the many examples well known to those skilled in the art.

The cover 14 includes a shell 30. The shell 30 includes a shell wall 32. The shell wall 32 rises from the level of and encloses the peripheral floor 24 of the base 12. The peripheral floor 24 thus extends between the bait cup wall 20 and the shell wall 32.

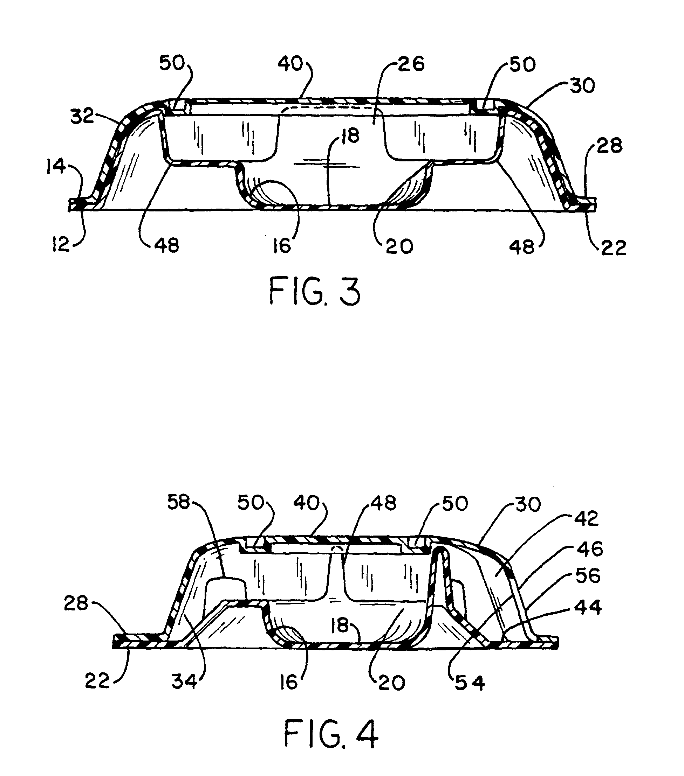

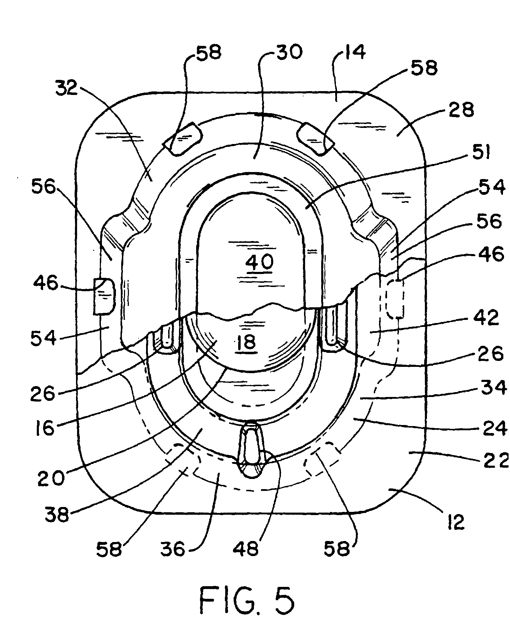

The shell wall 32 is spaced from the bait cup wall 20 as described above, and thereby defines a walkway 34 therebetween that has a walkway floor 36 that includes the peripheral floor 24 of the base 12. The walkway 34 is best seen in Fig. 4 and Fig. 5. In Fig. 5, for example, the walkway 34 occupies the space between the portion of the shell wall 32 shown in phantom and the underlying bait cup wall 20.

The walkway 34 has a width sufficient to allow targeted insects to walk thereon. The walkway floor 36 may either be flat or may include other contours bridging from the level of the peripheral flange 22 of the base 12 toward the level of the uppermost extension of the bait cup wall 20. For example, in the embodiment shown at 10, a ramp 38 is included that extends from a portion of the peripheral floor 24 that is at the level of the peripheral flange 22 upwardly to the upwardmost extension of the bait cup wall 20. So long as the bait cup wall 20 remains climbable to the targeted insects, the exact configuration of the walkway floor may be varied. However, the ramp 38 is a preferred configuration in that it braces and thus imparts desirable rigidity to the bait cup wall 20.

The shell 30 further includes a roof 40. The roof 40 spans and encloses the space encompassed by the shell wall 32 and is unitarily continuous therewith. The roof 40 is supportable by the side support 26 and, because of the longitudinal extension of the side support, receives support for an extended distance rather than at just an isolated point. The roof 40 is sufficiently spaced above the upwardmost extension of the bait cup wall 20 that targeted insects may crawl over the bait cup wall to reach any bait contained within the bait cup 16.

An antechamber 42 is provided that preferably is at least as long as the side support 26 when the side support is in its preferred orientation. The antechamber 42 is best seen in Fig. 4 and Fig. 5. The antechamber 42 is defined on one side by the side support 26 and is defined on another side by interior surfaces of the shell wall 32. A part of the peripheral floor 24 enclosed within the antechamber 42 forms an antechamber floor 44 that is continuous with the walkway floor 36.

The antechamber 42 alternatively may be described as follows. A part of the shell wall 32 that preferably is at least as wide as and in any event is at the location of the side support 26 constitutes an antechamber shell wall 54. The bait cup wall 20 at the location of the side support 26 and the antechamber shell wall 54 define the antechamber 42 between them. Preferably portions of the antechamber shell wall 54 are displaced distally relative to the portions of the shell wall 32 immediately on either side of the antechamber 42 so that the antechamber shell wall 54 includes a thrust-out wall section. Besides providing a structure that accommodates the required space to contain the side support 26 and, depending on the orientation of the side support, for insects to maneuver within the antechamber 42 between the antechamber shell wall 54 and the side support 26, this design also has the advantage of introducing lateral undulations in the shell wall 32 that increase its ability to resist compressive forces applied from above.

Preferably, an antechamber door 46 is provided in the portion of the shell wall 32 that constitutes the antechamber shell wall 54, the antechamber door 46 opening into the antechamber 42. The antechamber door 46 has a size sufficiently large to admit a targeted insect. When the side support 26 is in its preferred orientation, the antechamber door 46 is so located in relation to the side support 26 that straight-line access through the antechamber door to the bait cup 16 is blocked or at least restricted by the side support. With the side support 26 so oriented, the antechamber 42 provides sufficient space from the side support 26 to the antechamber shell wall 54 that a targeted insect may enter the bait station 10 through the antechamber door 46, avoid the side support by entering the walkway 34, and thus gain access to any bait contained in the bait cup 16 by climbing the bait cup wall 20.

Preferably there are two side supports 26, as shown in the embodiment of the drawings, the two side supports being located on opposing sides of the bait cup 16. The exact position and number of the side supports 26 with respect to the bait cup wall 20 can be varied to produce alternative embodiments of the bait station 10 that fall within the scope and breadth of the invention.

Thus, in the embodiment shown in Figs. 1-5, the side supports 26 are located immediately beside the bait cup 16, extending upwardly from the bait cup wall 20, so that the surfaces of the side supports 26 that are presented toward the bait cup 16 are substantially continuous with inwardly presented surfaces of the bait cup wall. However, a side support 26 may be at a location either within, at the side of, or exterior to and separated from the bait cup 16, at the discretion of the designer.

The location of the side supports 26 shown in the drawings is preferred as convenient to the manufacture of the base 12 in that it presents a less intricate shape for extraction from a mold. The arrangement shown also allows the bait cup wall 20 to provide a continuous, generally vertical support beneath one side of the side support 26, providing desirable resistance to crushing from a force applied to the side support from above. The arrangement also is preferred over a location of the side support 26 further removed from the center of the insect bait station 10 because the location shown reduces the distance between an opposed pair of side supports 26 that the roof 40 must span without support from beneath.

Further support for the roof 40 is preferred and may be provided by at least one end support 48. Preferably, the end support 48 extends upwardly from the base 12 at a location remote from the side support 26, the roof 40 being supportable by the end support. Preferably, as in the embodiment shown in Figs. 2-5, the bait station 10 has two side supports 26 located on different and preferably opposed sides of the bait cup 16, with two antechambers 42, one associated with each side support, each antechamber having an antechamber door 46. Also preferably, at least one end support 48 is located at a position remote from the side supports 26.

The preferred arrangement is that shown in the drawings, wherein two end supports 48 are included, the end supports being located in opposed relation, spaced between two side supports 26, with the roof 40 being supportable by the end supports and the side supports. As with the side supports 26, the end supports 48 may be placed at any desirable location with respect to the bait cup wall 20, whether located immediately adjacent to the margin of the bait cup 16, as is shown in the drawings, or located within or at a position removed outwardly from the margin of the bait cup. The advantages of the position shown for the end supports 48 corresponds to that discussed with respect to the position shown for the side supports 26.

As a further aid in achieving a dimensionally stable insect bait station 10, the roof 40 preferably includes a downwardly extending locator rib 50 located immediately adjacent to the side support 26 to restrict lateral movement of the roof with respect to the side support. The relationship of the locator rib 50 to the side support 26 that is shown in the embodiment of Figs. 1-5 is easily appreciated from Fig. 4.

If the bait station 10 includes two or more side supports 26 or one or more end supports 48, as is preferred, it is also preferred that the locator rib 50 be so designed as to pass immediately adjacent to each side support and each end support, again to restrict lateral movement of the roof 40 with respect to those structures.

In the embodiment shown in the drawings, the locator rib 50 is a single, continuous, downwardly extending channel 51 formed in the roof 40, as may be seen in Figs. 1, 2, 5, and 8. The embodiment of the locator rib 50 shown is thus a single, continuous structure located on the sides of the side supports 26 and end supports 48 that face inwardly, toward the middle of the bait station 10. This arrangement has the additional advantage of aiding in the automatic centering of the shell 30 with respect to the side and end supports 26,48 when the bait station 10 is being assembled. However, to fall within the scope of the spirit of the invention, it is only required that the locator rib 50 be located immediately adjacent to one or more side supports 26 or end supports 48. Thus, the locator rib 50 may be the continuous channel 51 shown in the drawings or, alternatively, may be one or more downwardly extending projections at the locations specified. A locator rib 50 falling within the scope and breadth of the invention could also include the structure that would be achieved if, instead of the channel 51 shown in the drawings, the locator rib instead was simply a central depressed area in the roof between the side supports and end supports. A locator rib said to be located "beside," "immediately beside," "adjacent to," or "immediately adjacent to" another structure such as a side or end support or a surface or part thereof shall be understood to be either in contact with that structure, surface, or part or be sufficiently close that it can come in contact when the shell is flexed by force applied by hand by a typical adult user of the insect trap.

As has been stated, it is preferred that the locator rib 50 extend downwardly from the roof 40. However, the locator rib 50 alternatively may extend upwardly, presenting a downwardly open groove (not shown) toward the interior of the bait station 10. So long as parts of the side supports 26 or end supports 48 extend upwardly to engage the interior of the groove, such an alternative arrangement falls within the breadth and scope of the invention. The term "locator rib" shall be understood to encompass both alternatives.

Again, with reference to Fig. 5, it will be apparent that, when the bait station includes opposed side supports 26, with or without the addition of opposed end supports 48, it is advantageous that the locator ribs 50 associated with opposed pairs of side or end supports be located adjacent to surfaces of the side and end supports that face toward the bait cup 16. Such an arrangement effectively restricts lateral movement of the roof 40 in any direction with respect to the base 12. Furthermore, this arrangement provides an automatic centering effect, directly locating the cover 14 (and specifically the shell 30) over the base 12 (and specifically the side and end supports 26,48) during assembly. Alternatively, to achieve the same effect, the locator ribs 50 associated with opposed side and end supports 26, 48 may be positioned adjacent to surfaces of the side and end supports that are presented outwardly, away from the bait cup 16, with a combination of these two alternative arrangements also being effective.

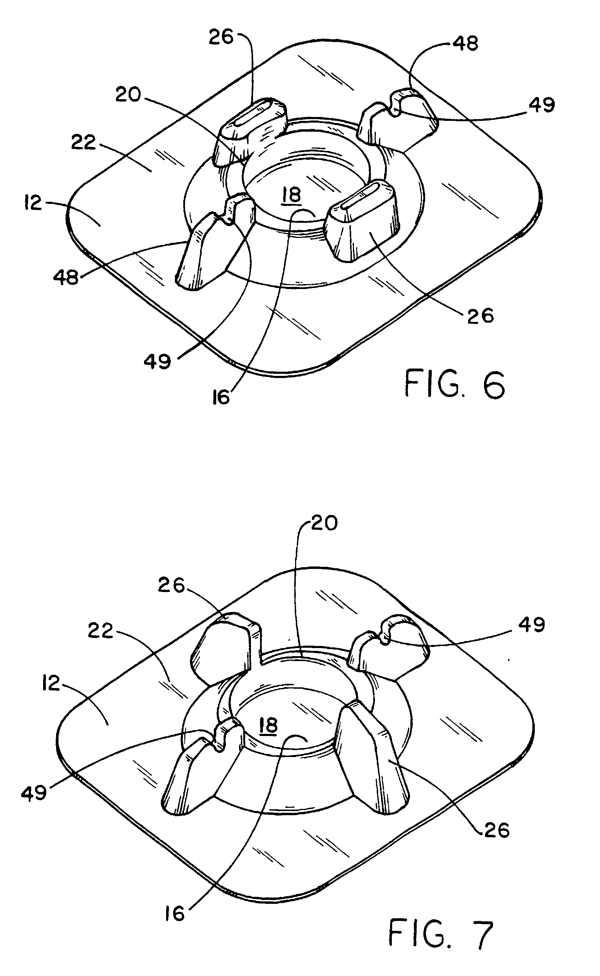

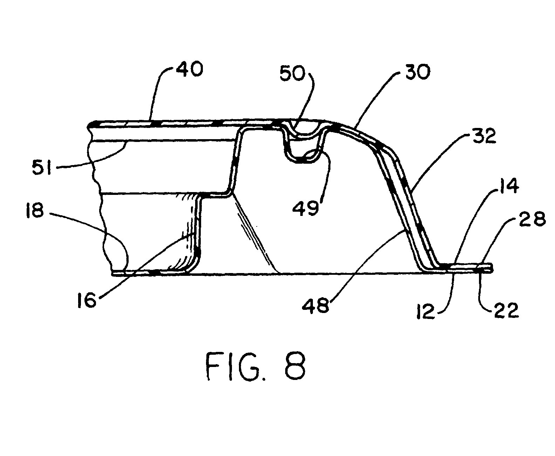

A second embodiment of the end support 48 that is especially preferred for its strength is shown in Figs. 6 -8. Features of the embodiment of the invention shown in Figs. 6-8 that directly correspond to those of the embodiment of Figs. 1-5 will be given like references numbers and will not be separately described. The embodiment of the end support 48 shown in Figs. 6-8 includes a roof detent 49 adapted to receive the locator rib 50 in mating relation, as is best shown in Fig. 8. The embodiment of the locator rib 50 shown in the figures extends downwardly, as is preferred, and the roof detent 49 is an upwardly open notch adapted to receive the locator rib. If the locator rib 50 extends upwardly, presenting a downwardly open groove, as in the alternative arrangement described above, the roof detent 49 may be an upwardly projecting structure adapted to engage the downwardly open groove. This arrangement firmly anchors the roof 40 and restricts its lateral motion with respect to the end support 26. If the locator rib 50 is itself laterally extended, as is the channel 51 shown in the drawings, the locator rib 50 then functions as a stabilized beam, further stiffening the roof 40.

The embodiment of the insect bait station shown in Fig. 6 is the embodiment presently preferred for most applications of the invention. However, Fig. 7 shows an alternative embodiment of the side support 26 that presents advantages especially for larger insect bait stations. This embodiment employs an alternative orientation of the side support 26, in which the side support extends not longitudinally generally along the bait cup wall 20 but, instead, extends outwardly from the vicinity of the bait cup wall toward the shell wall 32, preferably within an antechamber 42. With the side support 26 so oriented, the side support may be allowed to contact inwardly facing surfaces of the shell wall 32, outwardly facing surfaces of the locator rib 50, or (preferably) both, with the effect of both supporting the roof 40 and restricting the lateral movement of the shell 30 with respect to the side support. If an antechamber door 46 is included, it must then be located to one side of the side support 26.

As has been stated, above, the bait cup 16 may be round, oval, square, or any other convenient geometric figure having curved or straight sides, or a mixture of curved and straight sides. Similarly, the shell 30 may assume any of the variations in shape just referred to. The bait cup 16 and shell 30 may have generally concentric and corresponding shapes or they may have different shapes. By way of example only, a generally oval or oblong shell may be used alternatively with a round bait cup or with an oval or oblong bait cup wherein the ratio of length to width of the bait cup differs from the corresponding ratio of length to width of the shell.

In the preferred embodiment described thus far and shown in the drawings, the side supports 26 and end supports 48 are unitarily formed features of the base 12. However, understood more generally, these structures may alternatively be formed as unitary features of the cover 14, extending downwardly therefrom toward the base 12. Thus, the side supports 26 and end supports 48 may be more generally described as features either of the cover 14 or base 12 that span the space between the cover and the base, the roof 40 being supportable thereby, with the side support preferably extending longitudinally generally along the bait cup wall 20, as the term "generally along" has been defined previously. When extending downwardly from the cover 14, these features may be formed so as to rest immediately adjacent to such upwardly extending structures of the base 12 as the bait cup wall 20 or the ramp 38 to restrict lateral motion of the cover with respect to the base, these base structures now also functioning in a manner corresponding to that of the locator ribs 50 in the embodiment shown on the drawings and described above.

The bait station 10 may include other features not interfering or inconsistent with those already described. For example, additional doors 58 communicating with the walkway 34 and large enough to admit targeted insects may be included at convenient locations in the shell wall 32 that are not obstructed by a side support 26 or an end support 48. Antechambers need not be provided for such doors 58 in that insects entering the bait station 10 may directly proceed to climb the bait cup wall 20, with no need to move laterally to avoid an obstructing structure. Similarly, it is not strictly required that each antechamber 42 be provided with an antechamber door 46, if sufficient doors 58 are located elsewhere in the shell wall 32.

The invention further includes a method of presenting bait to crawling insects that includes the steps of providing a bait station made in accord with the description provided above wherein a selected bait has been deposited in the bait cup, followed by the step of placing the bait station on a surface where it will be exposed to the targeted insects.

While preferred forms of the invention have been shown in the drawings and have been described above, variations will be apparent to those skilled in the art. Consequently, the invention should not be construed as limited to the specific forms and steps shown and described. Instead, the invention should be understood in terms of the following claims.

### Industrial Applicability

The practical means of manufacture and use of the invention have been described, above. The use of effective and practical bait stations to present insecticide and other baits to crawling insects is of well established commercial application, world-wide.

## Claims

1. A bait station for targeted crawling insects, comprising a base and a cover that is fastened to the base,
the base including
a. a bait cup for containing a selected bait, the bait cup having a central floor surrounded by an insect-climbable bait cup wall extending upwardly from the central floor,
b. a peripheral flange including a peripheral floor distal and adjacent to the bait cup, and
c. at least one side support extending upwardly above the level of the bait cup wall and extending longitudinally generally along the bait cup wall;
the cover having a cover flange attached to the peripheral flange of the base and further including a shell that includes
a. a shell wall rising from the level of and enclosing the peripheral floor of the base, the shell wall being spaced from the bait cup wall to define a walkway therebetween having a walkway floor of a width sufficient to allow targeted insects to walk thereon,
b. a roof spanning the space encompassed by the shell wall, the roof being supportable by the side support and being sufficiently spaced above the bait cup wall that targeted insects may crawl over the bait cup wall to reach any bait contained within the bait cup,
c. an antechamber at least as long as the side support and defined on one side by the side support and on another side by interior surfaces of the shell wall, the antechamber having a floor that is continuous with the walkway floor,
d. at least one antechamber door in the shell wall, opening into the antechamber and having a size sufficiently large to admit a targeted insect, the antechamber door being so located in relation to the side support that straight-line access through the antechamber door to the bait cup is blocked by the side support,
the antechamber providing sufficient space from the side support to the shell wall that a targeted insect may enter the bait station through the antechamber door, avoid the side support by entering the walkway, and thus gain access to any bait contained in the bait cup.

2. The bait station of Claim 1 wherein the roof of the shell includes a downwardly extending locator rib that is located immediately adjacent to the side support to restrict lateral movement of the roof with respect to the side support.

3. The bait station of Claim 1 having an end support extending upwardly from the base at a location remote from the side support, the roof being supportable by the end support.

4. The bait station of Claim 1 having two side supports located on different sides of the bait cup and having two antechambers, one associated with each side support, each antechamber having an antechamber door.

5. The bait station of Claim 4 having a locator rib extending downwardly from the roof and located immediately adjacent to each side support to restrict lateral movement of the roof with respect to the side support.

6. The bait station of Claim 4 having end supports extending upwardly from the base at locations remote from the side supports, the roof being supportable by the end supports.

7. The bait station of Claim 6 wherein a locator rib extending downwardly from the roof is located immediately adjacent to each side support and each end support to restrict lateral movement of the roof with respect to the side and end supports.

8. The bait station of Claim 7 wherein locator ribs associated with a pair of opposed side or opposed end supports are all located adjacent to surfaces of the pair of side or end supports that face toward or away from the bait cup.

9. The bait station of Claim 8 wherein the shell has opposed sides and opposed ends, with a side support being located at each side and an end support being located at each end of the shell.

10. The bait station of Claim 1 wherein a part of the shell wall generally coextensive with and generally opposed to the side support constitutes an antechamber shell wall, the side support and the antechamber shell wall defining between them the antechamber, the antechamber shell wall being displaced distally relative to the portions of the shell wall immediately on either side of the antechamber so that the antechamber shell wall defines a thrust-out wall section.

11. The bait station of Claim 1 including an end support extending upwardly from the peripheral floor, the end support having a roof detent, the roof including a locator rib engaged with the roof detent of the end support to stabilize movement of the roof with respect to the end support.

12. The bait station of Claim 11 wherein the roof detent is upwardly open and the locator rib extends downwardly from the roof.

13. The bait station of Claim 11 wherein the locator rib is a channel that extends beyond the roof detent to either side of the end support to form a stabilized beam within the roof.

14. A method of presenting bait to targeted crawling insects comprising the steps of:
a. providing a bait station in accordance with any one of Claims 1 to 13, further including a selected bait placed within the bait cup;
b. placing the bait station on a surface upon which the targeted insects crawl.

## Patentansprüche

1. Köderstation für ins Ziel genommene Kriechinsekten, mit einem Unterteil und einer am Unterteil befestigten Abdeckung,
bei der der Unterteil umfasst:
a. einen zur Aufnahme eines gewählten Köders vorgesehenen Köderbecher mit einem mittigen Boden, den eine von Insekten überkriechbare Köderbecher-Wand umgibt, die vom mittigen Boden aus aufwärts vorsteht,
b. einen Umfangsflansch mit einem Umfangsboden distal zum und angrenzend an den Köderbecher, und
c. mindestens eine Seitenstütze, die allgemein aufwärts über das Niveau der Köderbecher-Wand hinaus vorsteht und allgemein entlang dieser in Längsrichtung verläuft;
und die Abdeckung einen Flansch besitzt, der am Umfangsflansch des Unterteils befestigt ist und weiterhin eine Schale einschließt, die umfasst:
a. eine Schalenwand, die vom Niveau des Umfangsbodens des Unterteils auf ansteigt und diesen umschließt und von der Köderbecher-Wand beabtandet ist unter Belassung eines Durchgangs zwischen der Schalen- und der Köderbecher-Wand, dessen Boden breit genug ist, um en ins Ziel genommenen Insekten das Begehen zu erlauben,
b. ein Dach, das den von der Schalenwand umfassten Raum überspannt, von der Seitenstütze abstützbar ist und über der Köderbecher-Wand weit genug beabstandet ist, dass die ins Ziel genommenen Insekten über die Köderbecher-Wand kriechen können, um einen im Köderbecher enthaltenen Köder zu erreichen,
c. eine Vorkammer, die mindestens so lang ist wie die Seitenstütze und auf einer Seite von der Seitenstütze und auf einer anderen Seite von Innenwandflächen definiert wird, wobei die Vorkammer einen Boden hat, der stetig in den Boden des Durchgangs übergeht,
d. mindestens eine Vorkammer-Tür in der Schalenwand, die sich zur Vorkammer öffnet und groß genug ist, um ein ins Ziel genommenes Insekt einzulassen, wobei die Vorkammer-Tür relativ zur Seitenstütze so liegt, dass letztere einen gradlinigen Zugang durch die Vorkammer-Tür zum Köderbecher blockiert,
wobei die Vorkammer zwischen der Seitenstütze und der Schalenwand genug Raum bietet, dass ein ins Ziel genommenes Insekt die Köderstation durch die Vorkammer-Tür betreten, die Seitenstütze durch Begehen des Durchgang vermeiden und so Zugang zu einem im Köderbecher enthaltenen Köder erreichen kann.

2. Köderstation nach Anspruch 1, bei der das Dach der Schale eine abwärts vorstehende Passrippe aufweist, die unmittelbar an die Seitenstütze angrenzt, um seitliche Bewegungen des Dachs relativ zur Seitenstütze einzuschränken.

3. Köderstation nach Anspruch 1, mit einer Endstütze, die an einer von der Seitenstütze entfernten Stelle vom Unterteil aus aufwärts vorsteht, wobei das Dach von der Endstütze abstützbar ist.

4. Köderstation nach Anspruch 1, mit zwei Seitenstützen auf verschiedenen Seiten des Köderbechers und zwei Vorkammern, die jeweils einer Seitenstütze zugeordnet sind und jeweils eine Vorkammer-Tür aufweisen.

5. Köderstation nach Anspruch 4, mit einer Passrippe, die vom Dach aus abwärts vorsteht und unmittelbar an jede Seitenstütze angrenzend angeordnet ist, um seitliche Bewegungen des Dachs relativ zur Seitenstütze zu beschränken.

6. Köderstation nach Anspruch 4, mit Endstützen, die an von den Seitenstützen entfernten Stellen vom Unterteil aus aufwärts vorstehen, wobei das Dach von den Endstützen abstützbar ist.

7. Köderstation nach Anspruch 6, bei der eine Passrippe, die sich vom Dach aus abwärts erstreckt, unmittelbar an die Seiten- und Endstützen angrenzend angeordnet ist, um seitliche Bewegungen des Dachs relativ zu den Seiten- und Endstützen einzuschränken.

8. Köderstation nach Anspruch 7, bei der jeweils einem Paar von gegenüber liegenden Seiten- oder Endstützen zugeordnete Passrippen angrenzend an Flächen derselben angeordnet sind, die zum Köderbecher hin oder von ihm weg weisen.

9. Köderstation nach Anspruch 8, bei der die Schale gegenüber liegende Seiten und gegenüber liegende Enden aufweist, wobei an jeder Seite der Schale eine Seitenstütze und an jedem Ende der Schale eine Endstütze angeordnet ist.

10. Köderstation nach Anspruch 1, bei der ein mit der Seitenstütze allgemein gleicherstreckender und dieser allgemein gegenüber liegender Teil der Schalenwand eine Vorkammer-Schalenwand bildet, wobei die Seitenstütze und die Vorkammer-Schalenwand zwischen sich die Vorkammer bilden und die Vorkammer-Schalenwand relativ zu den Schalenwandteilen unmittelbar beiderseits der Vorkammer distal versetzt ist, so dass die Vorkammer-Schalenwand einen auswärts vorgeschobenen Wandabschnitt bildet.

11. Köderstation nach Anspruch 1 mit einer Endstütze, die vom Umfangsboden aufwärts vorsteht, wobei die Endstütze eine Dach-Ausnehmung enthält und das Dach eine Passrippe aufweist, die in die Dach-Ausnehmung in der Endstütze eingreifen kann, um Bewegungen des Dachs relativ zur Endstütze zu stabilisieren.

12. Köderstation nach Anspruch 11, bei der die Dach-Ausnehmung aufwärts offen ist und die Passrippe vom Dach aus abwärts vorsteht.

13. Köderstation nach Anspruch 11, bei der die Passrippe ein Kanal ist, der über die Dach-Ausnehmung hinaus beiderseits der Endstütze vorsteht, um im Dach einen stabilisierten Träger auszubilden.

14. Verfahren zum Anbieten von Köder an Kriechinsekten mit folgenden Schritten:
a. Bereitstellen einer Köderstation nach einem der Ansprüche 1 bis 13, in deren Köderbecher ein ausgewählter Köder eingelegt ist,
b. Aufstellen der Köderstation auf einer Fläche, auf der die ins Ziel genommenen Insekten kriechen.

## Revendications

1. Station d'appât pour insectes cibles rampants comprenant une base et un couvercle assujetti à la base, la base incluant
a. une coupelle pour appât destinée à contenir un appât choisi, la coupelle pour appât ayant un plancher central entouré d'une paroi de la coupelle pour appât, s'élevant depuis le plancher central, que les insectes peuvent escalader,
b. une collerette périphérique incluant un plancher périphérique en situation distale et adjacente par rapport à la coupelle pour appât et
c. au moins un support latéral s'élevant au-dessus du niveau de la paroi de la coupelle pour appât et suivant dans l'ensemble longitudinalement la paroi de la coupelle pour appât ;
le couvercle ayant une collerette de couvercle fixée à la collerette périphérique de la base et incluant en outre une coquille qui inclut
a. une paroi de coquille s'élevant à partir du niveau du plancher périphérique de la base et enfermant celui-ci, la paroi de la coquille étant à distance de la paroi de la coupelle pour appât de manière à définir une galerie entre les deux parois, galerie ayant un plancher de galerie d'une largeur suffisante pour que les insectes cibles y circulent,
b. un toit s'étendant sur l'espace entouré par la paroi de la coquille, le toit pouvant être soutenu par le support latéral et étant à une distance, au-dessus de la paroi de la coupelle de l'appât, suffisante pour que les insectes cibles puissent ramper sur la paroi de la coupelle de l'appât et accéder à tout appât contenu dans la coupelle pour appât,
c. une antichambre au moins aussi longue que le support latéral et définie sur un côté par le support latéral et sur un autre côté par les surfaces intérieures de la paroi de la coquille, l'antichambre ayant un plancher continuant le plancher de la galerie,
d. au moins une porte d'antichambre dans la paroi de la coquille, ouvrant dans l'antichambre et ayant une dimension suffisante pour laisser entrer un insecte cible, la porte de l'antichambre étant située de telle façon, par rapport au support latéral, que l'accès en ligne droite par la porte de l'antichambre à la coupelle pour appât soit bloqué par le support latéral,
l'antichambre laissant suffisamment d'espace entre le support latéral et la paroi de la coquille pour qu'un insecte cible puisse pénétrer dans la station d'appât par la porte d'antichambre, éviter le support latéral en pénétrant dans la galerie, puis accéder à un appât contenu dans la coupelle pour appât.

2. Station d'appât selon la revendication 1, dans laquelle le toit de la coquille inclut une nervure de positionnement dirigée vers le bas, localisée immédiatement à côté du support latéral pour limiter le mouvement latéral du toit par rapport au support latéral.

3. Station d'appât selon la revendication 1, ayant un support terminal s'élevant depuis la base situé en une position éloignée du support latéral, le toit pouvant être soutenu par le support terminal.

4. Station d'appât selon la revendication 1, ayant deux supports latéraux situés sur des côtés différents de la coupelle pour appât et ayant deux antichambres, chacune associée à chaque support latéral, chaque antichambre ayant une porte d'antichambre.

5. Station d'appât selon la revendication 4, ayant une nervure de positionnement dirigée vers le bas à partir du toit et localisée immédiatement à côté de chaque support latéral pour limiter le mouvement latéral du toit par rapport au support latéral.

6. Station d'appât selon la revendication 4, ayant des supports terminaux dirigés vers le haut à partir de la base situés en des positions éloignées des supports latéraux, le toit pouvant être soutenu par les supports terminaux.

7. Station d'appât selon la revendication 6, dans laquelle une nervure de positionnement descendant du toit est localisée immédiatement en situation adjacente par rapport à chaque support latéral et chaque support terminal pour limiter le mouvement latéral du toit par rapport aux supports latéraux et terminaux.

8. Station d'appât selon la revendication 7, dans laquelle les nervures de positionnement associées à une paire de supports latéraux opposés ou terminaux opposés sont toutes situées en position adjacente par rapport aux surfaces de la paire de supports latéraux ou terminaux qui sont du côté de la coupelle pour appât ou de l'autre côté.

9. Station d'appât selon la revendication 8, dans laquelle la coquille a des extrémités opposées et des côtés opposés, un support latéral étant situé de chaque côté et un support terminal étant situé à chaque extrémité de la coquille.

10. Station d'appât selon la revendication 1, dans laquelle une partie de la paroi de la coquille, de même étendue en général que le support latéral et lui étant opposée en général, constitue une paroi de la coquille d'une antichambre, le support latéral et la paroi de la coquille de l'antichambre définissant entre eux l'antichambre, la paroi de la coquille de l'antichambre étant déplacée dans le sens distal par rapport aux parties de la paroi de la coquille immédiatement de chaque côté de l'antichambre si bien que la paroi de la coquille de l'antichambre définit une section de paroi bombée.

11. Station d'appât selon la revendication 1, incluant un support terminal dirigé vers le haut à partir du plancher périphérique, le support terminal ayant une verrouillage du toit, le toit incluant une nervure de positionnement engagée dans le verrouillage du toit du support terminal pour stabiliser le mouvement du toit par rapport au support terminal.

12. Station d'appât selon la revendication 11, dans laquelle le verrouillage du toit est ouvert vers le haut et la nervure de positionnement est dirigée vers le bas depuis le toit.

13. Station d'appât selon la revendication 11, dans laquelle la nervure de positionnement est un canal qui s'étend au-delà du verrouillage du toit de chaque côté du support terminal pour former une poutre stabilisée dans le toit.

14. Méthode de présentation d'un appât à des insectes cibles rampants comprenant les étapes consistant à :
a. fournir une station d'appât selon l'une quelconque des revendications 1 à 13, incluant en outre un appât choisi placé dans la station d'appât ;
b. placer la station d'appât sur une surface sur laquelle rampent les insectes cibles.
